# EUROPÄISCHE PATENTANMELDUNG

(11) **EP 1 811 791 A1**
(43) Veröffentlichungstag der Anmeldung: **25.07.2007**
(21) Anmeldenummer: 06001071.7
(22) Anmeldetag: 19.01.2006
(51) Int. Cl.: H04Q 3/66, H04Q 3/00

(54) **Verfahren zur Vermittlung von Telefongesprächen**

(71) Anmelder: 01058 Telecom GmbH, 40211 Düsseldorf (DE)
(72) Erfinder: Varol, Ömer Kaan, 40468 Düsseldorf (DE)
(74) Vertreter: Stenger, Watzke & Ring

(57) **Zusammenfassung**

Die Erfindung betrifft ein Verfahren zur Vermittlung von Telefongesprächen, bei dem ein Anrufer (1) eine Kombination aus der Anwahlnummer eines Vermittlungssystems und einer Rufnummer eines Anrufempfängers (2) wählt, über das Vermittlungssystem (3) eine Signalisierungsverbindung zwischen dem Anrufer und dem Anrufempfänger erzeugt wird und das Vermittlungssystem einen Gesprächskanal bereitstellt, sobald der Anrufempfänger den Anruf entgegennimmt.

## Beschreibung

Die Erfindung betrifft ein Verfahren zur Vermittlung von Telefongesprächen, insbesondere von empfangsseitig zu zahlenden Telefongesprächen.

Die Besonderheit empfangsseitig zu zahlender Telefongespräche, sogenannter R-Gespräche besteht darin, dass nicht der Anrufende sondern der Anrufempfänger die infolge des Telefongespräches entstehenden Kosten übernimmt. Um sicherzustellen, dass nicht in ungerechtfertigter Weise empfängerseitig Kosten entstehen, wird der Anrufempfänger vor Aufbau einer kommunikationstechnischen Verbindung zwischen Anrufendem und Anrufempfänger dazu aufgefordert, sein Einverständnis zur Kostenübernahme zu erklären. Bleibt eine solche Erklärung des Anrufempfängers aus, so wird dies seitens des operierenden Telekommunikationsunternehmens zur Kenntnis genommen und eine kommunikationstechnische Verbindung zwischen Anrufendem und Anrufempfänger wird nicht aufgebaut.

Die EP-A-1 473 919 beschreibt beispielsweise ein Verfahren zur Vermittlung von empfangsseitig zu zahlenden Telefongesprächen, bei dem die Rufnummer des Anrufempfängers vom Anrufenden an ein Vermittlungssystem übertragen wird, die Rufnummer in einem Datenbankabgleich auf Gültigkeit überprüft wird und anschließend nach vorhergehender Autorisierung durch den Anrufempfänger eine kommunikationstechnische Verbindung zwischen dem Anrufenden und dem Anrufempfänger automatisch aufgebaut wird. Zu diesem Zweck ist ein computergesteuertes Vermittlungssystem vorgesehen, dem der Anrufende die Rufnummer des Anrufempfängers mitteilt. Eingegeben wird die Rufnummer des Anrufempfängers über die Wahltastatur des auf Seiten des Anrufenden vorgesehenen Telefonapparates, so dass bei richtiger Eingabe durch den Anrufenden Vermittlungsfehler ausgeschlossen werden können. Die dem Vermittlungssystem auf diese Weise mitgeteilte Rufnummer wird zunächst in einem Datenbankabgleich auf Gültigkeit überprüft. Umfang einer solchen Prüfung kann beispielsweise die vom Anrufenden übertragene Rufnummer als solche sein, das heißt es wird in einem ersten Schritt vom System zunächst einmal überprüft, ob die vom Anrufenden angegebene Rufnummer tatsächlich existent ist. Je nach Informationsstand der Datenbank kann darüber hinaus überprüft werden, ob die als existent erkannte Rufnummer unter Umständen gesperrt ist, ob noch etwaig nicht gezahlte Rechnungen zur angegebenen Rufnummer existent sind oder ob die Rufnummer im Rahmen eines R-Gespräches nicht anwählbar ist. Darüber hinaus sind je nach Bedarf weitere Überprüfungskriterien möglich, je nachdem, welche Informationen im Detail in der zur Gültigkeitsüberprüfung genutzten Datenbank gespeichert sind. Nach erfolgreich durchgeführter Gültigkeitsüberprüfung der Rufnummer wird der Anrufempfänger vom Vermittlungssystem automatisch angewählt und über die Kostenfolge bei Entgegennahme des Telefongespräches informiert. Stimmt der Anrufempfänger der Übernahme der Telefongesprächskosten zu, so baut das Vermittlungssystem zwischen dem Anrufenden und dem Anrufempfänger automatisch eine kommunikationstechnische Verbindung auf, so dass diese nunmehr das vom Anrufenden gewünschte Telefongespräch führen können. Die infolge dieses Telefongespräches entstehenden Kosten werden dem Anrufempfänger in Rechnung gestellt. Sollte der Anrufempfänger einer Kostenübernahme nicht zustimmen, so wird der Anrufende vom Vermittlungssystem hierüber informiert und eine kommunikationstechnische Verbindung zwischen dem Anrufenden und dem Anrufempfänger wird seitens des Vermittlungssystems nicht aufgebaut.

Ein Nachteil des in der EP-A-1 473 919 beschriebenen Verfahrens besteht darin, dass dem Betreiber des Vermittlungssystems auch dann Aufwand und Kosten entstehen, wenn der Anschluss des Anrufempfängers, mit dem eine Verbindung hergestellt werden soll, besetzt ist oder wenn der Anrufempfänger den eingehenden Anruf gar nicht entgegennimmt, da in jedem Fall eine kommunikationstechnische Verbindung zwischen dem Anrufenden und dem Vermittlungssystem hergestellt wird.

Es ist daher eine **Aufgabe** der vorliegenden Erfindung, ein verbessertes, insbesondere für den Betreiber des Vermittlungssystems preisgünstigeres Verfahren zur Vermittlung von Telefongesprächen zu schaffen.

Diese Aufgabe wird gemäß der vorliegenden Erfindung durch ein Verfahren nach Anspruch 1 **gelöst**. Die abhängigen Ansprüche beziehen sich auf individuelle Ausgestaltungen des erfindungsgemäßen Verfahrens.

Bei dem Verfahren gemäß der vorliegenden Erfindung wählt ein Anrufer eine Kombination aus der Anwahlnummer eines Vermittlungssystems und einer Rufnummer eines Anrufempfängers. Das Vermittlungssystem erzeugt daraufhin eine sogenannte Signalisierungsverbindung zwischen dem Anrufer und dem Anrufempfänger, woraufhin der Anrufer ein Frei- oder Besetztzeichen vernimmt. Die Signalisierungsverbindung kann beispielsweise über einen Switch (über dessen Signalisierung, wie z. B. SS7), einen Router oder dergleichen realisiert werden. Solange lediglich eine Signalisierungsverbindung zwischen dem Anrufer und dem Anrufempfänger durch das Vermittlungssystem bereitgestellt wird, entstehen diesem keine Kosten.

Erst wenn der Anrufempfänger den Anruf entgegennimmt, also sobald der Anrufempfänger den Hörer abnimmt, stellt das Vermittlungssystem einen Gesprächskanal bereit, wodurch Kosten entstehen. Der Anrufempfänger wird vom Vermittlungssystem nunmehr automatisch über das R-Gespräch und die mit diesem verbundene Kostenfolge bei Entgegennahme des Telefongesprächs informiert. Stimmt der Anrufempfänger der Übernahme der Telefongesprächskosten zu, so baut das Vermittlungssystem zwischen dem Anrufenden und dem Anrufemfänger automatisch eine kommunikationstechnische Verbindung auf, so dass diese nunmehr das vom Anrufenden gewünschte Telefongespräch führen können. Die in Folge dieses Telefongesprächs entstehenden Kosten werden dem Anrufempfänger in Rechnung gestellt. Sollte der Anrufempfänger einer Kostenübernahme nicht zustimmen, so wird der Anrufende vom Vermittlungssystem hierüber informiert und eine kommunikationstechnische Verbindung zwischen dem Anrufenden und dem Anrufempfänger wird seitens des Vermittlungssystems nicht aufgebaut.

Der wesentliche Vorteil des erfindungsgemäßen Verfahrens besteht darin, dass dem Betreiber des Vermittlungssystems nur dann Aufwand und Kosten entstehen, wenn die Grundvoraussetzungen für eine erfolgreiche Vermittlung gegeben sind, nämlich wenn der Anrufempfänger den Hörer abnimmt. Ist die Anwahlnummer des Anrufempfängers hingegen besetzt, so vernimmt der Anrufende das Besetztzeichen, ohne dass dem Betreiber des Vermittlungssystems dabei Kosten entstehen. Gleiches gilt für den Fall, wenn der Anrufempfänger den Hörer nicht abnimmt.

Bei der Kombination aus der Anwahlnummer eines Vermittlungssystems und einer Rufnummer eines Anrufempfängers kann es sich beispielsweise um einen mehrstelligen Zahlencode handeln, der eine definierte Ziffernzahl aufweist (beispielsweise 0800 +... für das Vermittlungssystem +... für die Rufnummer des Anrufempfängers). Angehängt an diesen Zahlencode ist die Rufnummer des Anrufempfängers, die beispielsweise aus Vorwahl und Apparatennummer des Anrufempfängers gebildet ist. Vom Vermittlungssystem wird die an den Zahlencode angehängte Rufnummer des Anrufempfängers automatisch erkannt, so dass der Anruf zum Anrufempfänger umgeleitet werden kann, bis dieser den Hörer abnimmt.

Nimmt der Anrufempfänger den bei ihm eingehenden Anruf entgegen, so werden zunächst einmal der Anrufende und der Anrufempfänger vom Vermittlungssystem über die anstehende Vermittlung des empfangsseitig zu zahlenden Telefongespräches informiert. In diesem Zusammenhang wird der Anrufende vom Vermittlungssystem dazu aufgefordert, beispielsweise im Anschluss an ein vom Vermittlungssystem übersandtes akustisches Signal, eine ihn identifizierende Information, vorzugsweise seinen Namen, bekannt zu geben, was vorzugsweise mittels Spracheingabe geschieht. Zudem können dem Anrufenden weitergehende Informationen zur Anwendung, Hilfestellung oder dergleichen übermittelt werden. Der Anrufempfänger wird indes vom Vermittlungssystem über die Funktionsweise des empfangsseitig zu zahlenden Telefongespräches sowie über die gültigen Tarife informiert. Alsdann wird vom Vermittlungssystem eine kommunikationstechnische Verbindung zwischen dem Anrufenden und dem Anrufempfänger für ein vorgebbares Zeitintervall automatisch aufgebaut und der Anrufer wird durch Abgabe eines entsprechenden Signals dazu aufgefordert, nunmehr seine ihn identifizierende Information, vorzugsweise durch Spracheingabe bekannt zu machen. Diese wird dann über die aufgebaute kommunikationstechnische Verbindung zwischen Anrufendem und Anrufempfänger direkt an den Anrufempfänger weitergeleitet, so dass dieser darüber in Kenntnis gesetzt wird, wer die Person des Anrufenden ist.

Nach Ablauf des vorgebbaren Zeitintervalls wird die kommunikationstechnische Verbindung zwischen Anrufendem und Anrufempfänger wieder getrennt.

Im weiteren wird nun der Anrufende vom Verbindungssystem dazu aufgefordert, die Verbindung zu halten, während der Anrufempfänger vom Verbindungssystem nach seinem Einverständnis befragt wird, die Kosten des Telefongespräches zu übernehmen. Im Falle der positiven Bestätigung durch den Anrufempfänger wird erneut eine kommunikationstechnische Verbindung zwischen Anrufendem und Anrufempfänger aufgebaut, so dass nunmehr das Telefongespräch geführt werden kann. Sollte der Anrufempfänger sein Einverständnis zur Kostenübernahme nicht geben, so wird dies dem Anrufenden mitgeteilt und die Verbindung des Anrufenden zum Vermittlungssystem einerseits sowie auch die Verbindung des Vermittlungssystems zum Anrufempfängers andererseits wird abgebrochen. Das Gespräch ist damit beendet.

Von Vorteil ist des weiteren, dass die zur Identifizierung des Anrufenden an den Anrufempfänger zu übermittelnde Information nicht über das Vermittlungssystem, sondern über eine direkt zwischen dem Anrufenden und dem Anrufempfänger temporär ausgebildete kommunikationstechnische Verbindung geführt wird. Erreicht wird hierdurch eine Entlastung des Vermittlungssystems, das nur eine begrenzte Anzahl von Vermittlungsdiensten gleichzeitig abwickeln kann. Darüber hinaus kann im Falle der Gesprächsautorisierung durch den Anrufempfänger auch die zur Übertragung der den Anrufenden identifizierenden Information erfolgte Freischaltung der kommunikationstechnischen Verbindung zwischen Anrufendem und Anrufempfänger in Rechnung gestellt werden. Zu Lasten des Anrufempfängers kann so eine weitere Kostenreduzierung des das Vermittlungssystem bereitstellenden Betreibers erreicht werden.

Vorzugsweise ist die Vermittlung des empfangsseitig zu zahlenden Telefongespräches sowohl für den Anrufenden als auch für den Anrufempfänger kostenlos. Erst nach dem durch den Anrufempfänger autorisierten Zustandekommen der kommunikationstechnischen Verbindung zwischen dem Anrufenden und dem Anrufempfänger entstehen die vom Anrufempfänger zu übernehmenden Kosten. Für eine exakte Abrechnung wird daher der Zeitpunkt des Zustandekommens der kommunikationstechnischen Verbindung zwischen dem Anrufenden und dem Anrufempfänger vom Vermittlungssystem erfasst und die Zeit bis zur Beendigung der kommunikationstechnischen Verbindung gestoppt. Die sich hieraus ergebende Zeitdauer ergibt in Kombination mit dem für das Telefongespräch gültigen Tarif die vom Anrufempfänger zu zahlenden Gebühren. Erfindungsgemäß ist dabei vorgesehen, dass die zu zahlenden Gebühren automatisch vom Vermittlungssystem berechnet und dem Anrufempfänger in Rechnung gestellt werden.

Nachfolgend wird das Grundprinzip des erfindungsgemäßen Verfahrens anhand eines Ausführungsbeispiels unter Bezugnahme auf die Zeichnung näher beschrieben. Darin ist:
- Fig. 1: eine schematische Darstellung, die einen ersten Schritt des Ablaufs des erfindungsgemäßen Verfahrens zeigt und
- Fig. 2: eine schematische Darstellung, die einen zweiten Schritt des Ablaufs des erfindungsgemäßen Verfahrens zeigt.

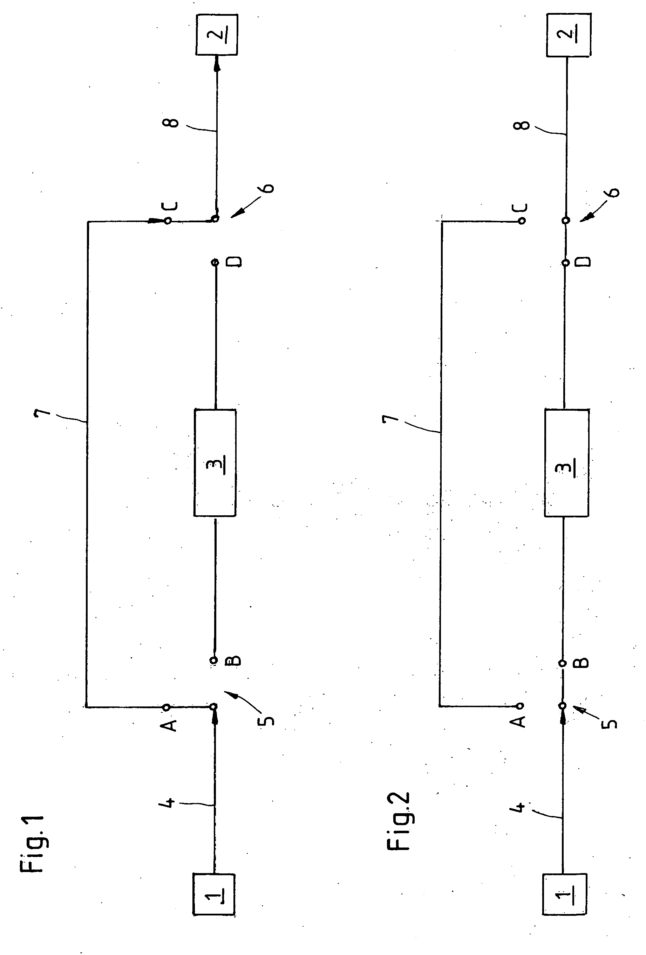

Dargestellt in Fig. 1 ist schematisch der Anrufende 1, der Anrufempfänger 2 sowie das Vermittlungssystem 3. Gemäß einem ersten Verfahrensschritt wird das Vermittlungssystem 3 vom Anrufenden 1 angewählt. Symbolisch dargestellt ist dies in der Fig. 1 durch den mit der Bezugsziffer 4 gekennzeichneten Pfeil. Zur Anwahl des Vermittlungssystems 3 dient eine mehrzahlige Rufnummer, die aus der Anwahlnummer des Vermittlungssystems 3 einerseits und der Rufnummer des Anrufempfängers 2 andererseits zusammengesetzt ist. Die zur Anwahl des Vermittlungssystems 3 zur Verfügung stehende Zahlenkombination ist hinsichtlich ihrer Stellen definiert, so dass das Vermittlungssystem 3 eine eindeutige Identifizierung der an die Wahlnummer für das Vermittlungssystem 3 angehängten Rufnummer des Anrufempfängers 2 vornehmen kann. Über diese Rufnummer des Anrufempfängers 2 wird nun mittels zweier Schalter 5 und 6 die sich in den entsprechenden Positionen A und C befinden, eine Signalisierungsverbindung zwischen dem Anrufer 1 und dem Anrufempfänger 2 erzeugt, was durch die Pfeile 7 und 8 verdeutlicht ist. Ist die Leitung zum Anrufempfänger 2 frei, so ertönt beim Anrufenden 1 ein Freizeichen. Ist die Leitung hingegen besetzt, so ist für den Anrufer 1 ein Besetztzeichen zu hören. Bei dieser Signalisierungsverbindung entstehen noch keine Kosten.

In dem Moment, in dem der Anrufempfänger 2 den Hörer abnimmt, schalten die Schalter 5 und 6 aus den Positionen A und C in die entsprechenden Positionen B und D, wie es in Fig. 2 gezeigt ist, um auf diese Weise einen Gesprächskanal zwischen dem Anrufer 1 und dem Anrufempfänger 2 unter Zwischenschaltung des Vermittlungssystems 3 zu erzeugen, was durch die Pfeile 9 und 10 angedeutet ist. Erst mit der Bereitstellung dieses Gesprächskanals entstehen Kosten. Nunmehr kann eine Vermittlung zwischen dem Anrufer 1 und dem Anrufempfänger 2 seitens des Vermittlungssystems 3 durchgeführt werden, worauf nachfolgend jedoch nicht näher eingegangen werden soll.

### Bezugszeichen

- 1: Anrufer
- 2: Anrufempfänger
- 3: Vermittlungssystem
- 4: Pfeil
- 5: Schalter
- 6: Schalter
- 7: Pfeil
- 8: Pfeil
- 9: Pfeil
- 10: Pfeil

- A, B, C, D: Schalterpositionen

## Patentansprüche

1. Verfahren zur Vermittlung von Telefongesprächen, bei dem
- ein Anrufer (1) eine Kombination aus der Anwahlnummer eines Vermittlungssystems und einer Rufnummer eines Anrufempfängers (2) wählt,
- über das Vermittlungssystem (3) eine Signalisierungsverbindung zwischen dem Anrufer (1) und dem Anrufempfänger (2) erzeugt wird und
- das Vermittlungssystem (3) einen Gesprächskanal bereitstellt, sobald der Anrufempfänger (2) den Anruf entgegennimmt.

## Geänderte Patentansprüche

### Geänderte Patentansprüche gemäss Regel 86(2) EPÜ.

**1.** Verfahren zur Vermittlung von empfangsseitig zu zahlenden Telefongesprächen, bei dem
- ein Anrufer (1) eine Kombination aus der Anwahl eines Vermittlungssystems (3) und einer Rufnummer eines Anrufempfängers (2) wählt,
- über das Vermittlungssystem (3) eine Signalisierungsverbindung zwischen dem Anrufer (1) und dem Anrufempfänger (2) erzeugt wird,
- das Vermittlungssystem (3) einen Gesprächskanal zwischen dem Vermittlungssystem (3) und dem Anrufer (1) einerseits und zwischen dem Vermittlungssystem (3) und dem Anrufempfänger (2) andererseits bereitstellt, sobald der Anrufempfänger (2) den Anruf entgegennimmt, und
- das Vermittlungssystem (3) nach vorhergehender Autorisierung durch den Anrufempfänger (2) eine kommunikationstechnische Verbindung zwischen dem Anrufer (1) und dem Anrufempfänger (2) automatisch aufbaut.

**2.** Verfahren nach Anspruch 1, **dadurch gekennzeichnet, daß** vor einem Aufbau der durch den Anrufempfänger (2) autorisierten kommunikationstechnischen Verbindung zwischen dem Anrufer (1) und dem Anrufempfänger (2) vom Vermittlungssystem (3) eine kommunikationstechnische Verbindung zwischen dem Anrufer (1) und dem Anrufempfänger (2) für ein vorgebbares Zeitintervall automatisch aufgebaut und der Anrufer (1) dazu aufgefordert wird, eine ihn identifizierende Information bekannt zu machen, die an den Anrufempfänger (2) über die nur temporär ausgebildete kommunikationstechnische Verbindung direkt weitergeleitet wird.

**3.** Verfahren nach Anspruch 2, **dadurch gekennzeichnet, daß** im Falle der Gesprächsautorisierung durch den Anrufempfänger (2) auch die zur Übertragung der den Anrufer (1) identifizierenden Information erfolgte Freischaltung der kommunikationstechnischen Verbindung zwischen Anrufer (1) und Anrufempfänger (2) dem Anrufempfänger (2) in Rechnung gestellt wird.
